# FASCICULE DE BREVET EUROPEEN

(11) **EP 1 750 823 B1**
(45) Date de publication et mention de la délivrance du brevet: **19.04.2017**
(21) Numéro de dépôt: 05762343.1
(22) Date de dépôt: 22.04.2005
(51) Int. Cl.: C02F 1/04, B01D 1/28

(54) **PROCEDE ET INSTALLATION DE DESSALEMENT D'EAU DE MER PAR DISTILLATION A EFFETS MULTIPLES AVEC COMPRESSION MECANIQUE ET THERMIQUE, DE VAPEUR**
MEERWASSER-ENTSALZUNGSVERFAHREN UND -ANLAGE UNTER VERWENDUNG VON MEHRFACHEFFEKT-DESTILLATION MIT MECHANISCHER UND THERMISCHER DAMPFKOMPRESSION
SEA-WATER DESANILATION METHOD AND FACILITY USING MULTIPLE EFFECT DISTILLATION WITH MECHANICAL AND THERMAL VAPOUR COMPRESSION

(30) Priorité: 27.04.2004 FR 0404441
(43) Date de publication de la demande: 14.02.2007
(73) Titulaire: Société Internationale de Dessalement - SIDEM, 75009 Paris (FR)
(72) Inventeur: BAUJAT, Vincent, F-78150 Le Chesnay (FR); CANTON, Gérard, F-92260 Fontenay-Aux-Roses (FR)
(74) Mandataire: Largeau, Béatrice
(86) Numéro de dépôt international: PCT/FR2005/001000
(87) Numéro de publication internationale: WO 2005/105255

(56) Documents cités:
- EP-A- 0 949 204
- FR-A- 2 780 719
- US-A- 3 499 827
- US-A- 3 597 328
- US-A- 3 980 527
- US-A- 4 820 542
- US-A- 5 409 576
- US-B1- 6 536 523
- ALY S E: "A study of a new thermal vapor compression/multi-effect stack (TVC/MES) low temperature distillation system" DESALINATION, ELSEVIER, AMSTERDAM, NL, vol. 103, no. 3, décembre 1995 (1995-12), pages 257-263, XP004019070 ISSN: 0011-9164

## Description

L'invention concerne un procédé amélioré de dessalement d'eau de mer par distillation à effets multiples avec recyclage de la vapeur alternativement par compression mécanique et thermocompression de vapeur, ainsi qu'une installation de dessalement d'eau de mer permettant de mettre en oeuvre un tel procédé.

La distillation à effets multiples (MED, *multiple effect distillation*) est, à côté de la distillation par détentes successives, l'une des deux principales méthodes industrielles de dessalement de l'eau de mer imitant le cycle naturel de l'eau (évaporation-condensation-pluie).

Cette méthode met à profit la chaleur de condensation, libérée lors de la condensation d'une première quantité de vapeur d'eau, pour vaporiser de l'eau de mer et générer ainsi de nouveau de la vapeur d'eau susceptible d'être condensée, etc. Cette succession d'évaporations et de condensations est possible dès lors que chaque étape est réalisée à une température et une pression inférieures à la précédente.

Une installation de dessalement d'eau de mer par distillation à effets multiples comprend ainsi une multitude de chambres ou cellules de distillation juxtaposées, appelées « effets », qui fonctionnent à des pressions et températures décroissantes du premier au dernier effet. Le premier effet, qui est aussi le plus chaud, est alimenté par de la vapeur d'eau se condensant à une température généralement comprise entre environ 60 et 70 °C (vapeur de chauffe). La condensation de cette vapeur chaude dans l'échangeur de chaleur du premier effet libère de la chaleur de condensation. Cette chaleur de condensation fournit l'énergie de vaporisation (chaleur latente d'évaporation) nécessaire pour transformer en vapeur une partie de l'eau de mer s'écoulant en film mince sur l'autre face de l'échangeur de chaleur. La vapeur d'eau ainsi formée peut alors être utilisée pour alimenter l'échangeur de chaleur d'un deuxième effet de conception similaire au premier mais fonctionnant à une température et une pression plus basses.

La condensation d'un kg de vapeur de chauffe dans le premier échangeur de chaleur produit à peu près la même quantité de vapeur
et, en première approximation, une installation à *n* cellules, ou effets, permettra ainsi de produire *n* kg d'eau distillée par kg de vapeur de chauffe.

Le nombre d'effets est toutefois limité par l'écart entre la température de la vapeur de chauffe, que l'on cherche généralement à limiter pour minimiser les risques d'entartrage du système, et la température de l'eau de mer à dessaler qui constitue la source froide du système. Le nombre d'effets d'une installation est généralement compris entre 2 et 12.

La partie de distillation proprement dite est en outre généralement combinée à un système de compression et de recyclage de la vapeur produite, tel que décrit par exemple dans le document US 5 409 576**.**

Ce recyclage de la vapeur par compression peut se faire
- soit à l'aide d'un compresseur mécanique (MVC, de l'anglais *Mecanical Vapour Compression,* compression mécanique de vapeur), tel que décrit par exemple dans le document US 3 499 827,
- soit par un éjecteur à jet de vapeur (TVC, de l'anglais *Thermal Vapor Compression*, compression thermique ou thermocompression de vapeur).

Un compresseur mécanique fonctionne uniquement avec de l'énergie électrique. La consommation d'énergie d'une unité de dessalement MED-MVC est généralement considérée comme faible (d'environ 18 kWh/m³ pour une installation à effet unique à environ 8 kWh/m³ pour un évaporateur à 4 effets). Les principaux inconvénients d'un compresseur mécanique sont son coût relativement élevé et la capacité limitée des compresseurs actuellement disponibles qui limite la capacité des installations de dessalement MED-MVC à environ 5000 m³ d'eau par jour.

Un éjecteur à jet de vapeur utilise non pas de l'énergie électrique mais l'énergie cinétique d'une vapeur d'eau (vapeur motrice), injectée sous pression par une tuyère dans une zone de plus faible pression, pour aspirer et entraîner de la vapeur d'eau à basse pression et basse température et comprimer le mélange obtenu jusqu'à une pression suffisante pour permettre son utilisation en tant que vapeur de chauffe de l'effet le plus chaud. Dans la présente demande, on utilisera indifféremment et de manière parfaitement équivalente les termes « éjecteur », « éjectocompresseur », « thermocompresseur » ou « compresseur thermique » pour désigner un tel éjecteur à jet de vapeur.

Les installations industrielles de dessalement d'eau de mer par distillation à effets multiples sont en outre souvent couplées à une centrale thermique. Une centrale thermique produit en effet en sortie de turbine une grande quantité de vapeur d'eau qui constitue une source d'énergie récupérable importante.

Le couplage d'une installation de dessalement à une centrale thermique permet d'utiliser cette vapeur d'eau en tant que vapeur d'alimentation (vapeur motrice V_{M}) d'un éjecteur à jet de vapeur dans une installation de dessalement d'eau de mer de type MED-TVC.

Dans le cas d'un tel couplage d'une installation de dessalement en sortie de turbine d'une centrale thermique se pose alors le problème de l'instabilité de la demande en électricité. L'électricité est un bien non stockable et la production d'électricité doit être constamment adaptée aux besoins des ménages et de l'industrie. Les grandes centrales thermiques doivent répondre en particulier à une demande électrique qui varie en fonction des saisons alors que la demande en eau potable reste à peu près constante sur l'année. La variation de la production d'électricité d'une centrale se traduit par la variation de la quantité de vapeur d'eau disponible en sortie de turbine. En cas de production intense, la quantité de vapeur produite est importante mais elle diminue fortement lorsque la production d'énergie électrique faiblit. Il est alors nécessaire de pallier le manque de vapeur par la production de vapeur d'eau supplémentaire par des chaudières auxiliaires prévues spécialement à cet effet. Cette solution est toutefois peu économique car le coût lié à la génération de vapeur supplémentaire se répercute directement sur le coût de production de l'eau douce.

Une autre solution consiste à coupler une installation de dessalement à une centrale électrique en combinant une centrale électrique, une unité de distillation à effets multiples et un évaporateur à compression, tel que décrit dans le document US 3 597 328. Cette solution est conçue afin de permettre à la centrale électrique de fournir une production de vapeur sensiblement constante.

Une autre possibilité pour garantir une production d'eau douce suffisante - même en cas de demande énergétique faible - consiste à prévoir une capacité de dessalement supplémentaire indépendante de l'installation principale. Cette installation indépendante peut être par exemple une installation de type MED-MVC fonctionnant uniquement avec de l'électricité, ou encore une installation de dessalement par osmose inverse. Bien que de telles solutions soit assez rentables du point de vue énergétique car elles consomment relativement peu d'électricité et profitent opportunément de la capacité de production électrique non employée, l'inconvénient d'une telle installation de dessalement séparée réside dans le fait qu'elle sera inutilisée pendant les périodes de l'année où la centrale thermique produira suffisamment de vapeur pour faire fonctionner l'installation MED-TVC. Le fait que la capacité de dessalement ne soit pas pleinement utilisée toute l'année aura tendance à renchérir l'eau potable. L'inactivité d'une partie de la capacité de dessalement ne peut être évitée qu'en utilisant tout au long de l'année une même unité de distillation MED et en la faisant fonctionner avec différents moyens de compression de la vapeur d'eau, choisis en fonction de la quantité et de la pression de la vapeur d'eau produite par la centrale.

La solution idéale qui consisterait à remplacer, pendant les périodes de faible production d'électricité, l'éjectocompresseur d'une installation MED-TVC par un compresseur mécanique, n'a jusqu'ici pas été envisagée car les installations de dessalement d'eau de mer avec recyclage de la vapeur d'eau étaient prévues soit pour l'un soit pour l'autre type de compresseur mais non pas pour les deux à la fois.

En effet, une installation de dessalement par distillation à effets multiples conçue pour fonctionner avec un éjecteur à jet de vapeur ne peut généralement pas fonctionner avec un compresseur mécanique car ce dernier n'apporterait pas assez d'énergie thermique au cycle. Inversement, une unité conçue pour fonctionner avec un compresseur mécanique de vapeur ne serait pas adaptée à la thermocompression de vapeur car l'énergie thermique en excès apportée par la vapeur motrice ne pourrait pas être évacuée de manière satisfaisante.

La Demanderesse a mis au point une installation de dessalement d'eau de mer à effets multiples avec recyclage de la vapeur d'eau par compression, conçue spécialement pour fonctionner alternativement avec un éjecteur à jet de vapeur (mode thermique) et avec un compresseur mécanique (mode électrique). Une telle installation fonctionne selon un procédé appelé « MED-MTVC » (*Multiple Effect Distillation with Mecanical and Thermal Vapor Compression*) permettant à la fois d'assurer la production nominale en mode électrique et d'évacuer l'excès de chaleur introduit en cas de fonctionnement en mode thermique.

Le problème de l'excès d'énergie thermique d'un système fonctionnant en mode de compression thermique et de l'insuffisance d'énergie thermique du même système fonctionnant en mode de compression mécanique (électrique) a été résolue grâce à l'utilisation combinée originale (a) d'un moyen d'évacuation de chaleur, (b) d'un premier moyen de récupération de chaleur et (c) d'un deuxième moyen de récupération de chaleur, chacun de ces trois moyens fonctionnant indépendamment et pouvant de ce fait être arrêté ou mis en route indépendamment, permettant ainsi une régulation souple de l'équilibre thermique de l'installation MED-MTVC en fonction des conditions extérieures (température de l'eau de mer, quantité et pression de la vapeur fournie par la centrale).

L'invention a par conséquent pour objet une installation de dessalement d'eau de mer par distillation à effets multiples (MED) avec compression de vapeur, destinée à être couplée à une centrale thermique, comprenant
(A) une série de cellules de distillation (effets), chaque cellule étant constituée
   - d'une enceinte fermée comportant au moins un moyen permettant de faire couler de l'eau de mer en film mince sur un échangeur de chaleur chauffé par de la vapeur d'eau jusqu'à une température suffisante pour vaporiser une partie de l'eau de mer s'écoulant par gravité en film mince sur l'échangeur de chaleur,
   - d'un moyen permettant d'amener la vapeur d'eau ainsi formée dans l'échangeur de chaleur de l'effet suivant,
   - d'un moyen d'évacuation de l'eau distillée liquide formée par condensation de la vapeur d'eau dans l'échangeur de chaleur,
   - d'un moyen d'aspiration des gaz incondensables (O₂, N₂, CO₂),
   - d'un moyen d'évacuation de la saumure restant après évaporation d'une partie de l'eau de mer,
   chaque effet fonctionnant à une température et une pression inférieures à celles de l'effet précédent, et
(B) un moyen de compression de vapeur permettant de comprimer au moins une partie de la vapeur d'eau émise par un des effets (effet de prélèvement), de préférence le dernier, et de la réinjecter dans le premier effet,
cette installation étant caractérisée par le fait que le moyen de compression de vapeur comprend à la fois un compresseur mécanique de vapeur fonctionnant uniquement à l'électricité et un éjecto-compresseur fonctionnant uniquement avec de la vapeur motrice fournie par la centrale thermique en sortie de turbine, les deux compresseurs étant montés en parallèle entre le premier effet et leur effet de prélèvement et fonctionnant en alternance selon la quantité de vapeur d'eau disponible en sortie de turbine, et par le fait que l'installation comprend en outre, en combinaison, (a) un moyen d'évacuation de chaleur situé dans le dernier effet, (b) un premier moyen de récupération de chaleur situé dans la conduite d'évacuation de l'eau distillée et (c) un deuxième moyen de récupération de chaleur situé dans la conduite d'évacuation de la saumure, chacun de ces trois moyens (a), (b) et (c) fonctionnant indépendamment les uns des autres.

L'invention a en outre pour objet un procédé de dessalement d'eau de mer par distillation à effets multiples avec compression de vapeur utilisant l'installation ci-dessus. Ce procédé comprend les étapes (a) à (f) suivantes :
(a) vaporisation, dans le premier d'une série d'effets, d'eau de mer s'écoulant par gravité en film mince sur un premier échangeur de chaleur chauffé par de la vapeur d'eau jusqu'à une température suffisante pour vaporiser ladite eau de mer,
(b) le transfert de la vapeur d'eau formée, en tant que fluide caloporteur dans l'échangeur de chaleur de l'effet suivant fonctionnant à une température et une pression inférieures à celles de l'effet précédent,
(c) la condensation de la vapeur d'eau dans l'échangeur de chaleur de l'effet suivant et,
(d) grâce à la chaleur de condensation libérée, la vaporisation d'eau de mer s'écoulant en film mince sur ledit échangeur de chaleur, la succession des étapes (b) à (d) étant répétée autant de fois que l'installation comporte d'effets supplémentaires fonctionnant chacun à une température et une pression inférieures à celles de l'effet précédent,
(e) la compression d'une partie ou de la totalité de la vapeur d'eau V émise par un des effets (effet de prélèvement), de préférence le dernier, et
(f) réinjection de la vapeur d'eau comprimée dans l'étape (e) en tant que fluide caloporteur dans l'échangeur de chaleur du premier effet de l'étape (a),
mais se distingue des procédés connus par le fait
- que la compression de vapeur (e) se fait en alternance soit avec un compresseur mécanique de vapeur fonctionnant uniquement à l'électricité soit avec un éjecto-compresseur fonctionnant uniquement avec de la vapeur motrice fournie par une centrale thermique, c'est-à-dire
- qu'en cas de quantité suffisante de vapeur d'eau disponible en sortie de turbine de la centrale, la compression et réinjection de la vapeur se fait par compression thermique au moyen d'un éjectocompresseur alimenté par de la vapeur motrice chaude (V_{M}) provenant de la turbine d'une centrale thermique, l'excès de chaleur du système dû à l'injection de vapeur chaude étant alors évacué au moyen d'un condenseur alimenté par de l'eau de mer et situé dans le dernier effet, et
- qu'en cas de quantité insuffisante de vapeur d'eau disponible en sortie de turbine de la centrale, la compression et réinjection de la vapeur d'eau se fait par compression mécanique au moyen d'un compresseur mécanique alimenté uniquement avec de l'électricité, l'énergie thermique véhiculée par l'eau distillée et par la saumure produites étant alors récupérée au moyen d'un premier et d'un deuxième moyen de récupération de chaleur situés respectivement dans la conduite d'évacuation d'eau distillée et dans la conduite d'évacuation de la saumure.

Ainsi, lorsque la centrale électrique doit répondre à une forte demande en électricité, une grande quantité de vapeur peut être récupérée en sortie de turbine et l'installation est utilisée en mode thermique, c'est-à-dire avec recyclage de vapeur par thermocompression et évacuation de l'excès de chaleur injecté avec la vapeur motrice. Lorsque la demande en énergie électrique baisse et la quantité de vapeur produite par la centrale devient insuffisante pour faire fonctionner l'évaporateur, la capacité de production électrique non utilisée est mise à profit pour alimenter en électricité un compresseur mécanique de vapeur et faire fonctionner l'unité en mode électrique.

Le moyen d'évacuation de chaleur (a) est un condenseur situé dans l'effet le plus froid. Ce condenseur, qui est un échangeur de chaleur alimenté par de l'eau de mer froide, sert à condenser la partie non recyclée de la vapeur d'eau formée dans le dernier effet. La chaleur de condensation libérée par cette condensation chauffe l'eau de mer qui est au moins en partie utilisée en tant qu'eau de mer d'appoint préchauffée pour alimenter les dispositifs d'arrosage et dont une autre partie peut être rejetée. Ce condenseur fonctionnera uniquement lorsque l'installation fonctionne en mode thermique.

Le premier moyen de récupération de chaleur (b) est un échangeur de chaleur eau de mer/eau distillée situé au niveau de la conduite d'évacuation de l'eau distillée produite par le système. Cette eau distillée est en effet généralement à une température comprise entre 40 et 60 °C et peut donc servir à préchauffer l'eau de mer d'appoint lorsque le condenseur (a) ne remplit pas ce rôle. Ce moyen de récupération de chaleur (b) fonctionnera lorsque l'installation travaille en mode de compression électrique. Dans certaines conditions, par exemple lorsque l'eau de mer prélevée est relativement froide, il peut être utile de le faire fonctionner également en mode de compression thermique.

Le deuxième moyen de récupération de chaleur (c) est un échangeur de chaleur eau de mer/saumure situé au niveau de la conduite d'évacuation de la saumure produite par le système. Cette saumure est généralement à une température comprise entre 40 et 60°C et peut donc servir, comme l'eau distillée, au préchauffage de l'eau de mer d'appoint. Comme l'échangeur de chaleur (b), ce deuxième échangeur de chaleur (c) fonctionne toujours en mode de compression électrique, et peut dans certains cas fonctionner également en mode de compression thermique.

L'installation et le procédé de dessalement de l'invention seront décrits ci-après avec un thermocompresseur unique et un compresseur mécanique unique. Il peut toutefois être utile, voire nécessaire, dans certains cas de remplacer le thermocompresseur et/ou le compresseur mécanique respectivement par un ensemble de thermocompresseurs montés en parallèle, ou par un ensemble de compresseurs mécaniques, montés en parallèle et/ou en série. Chacun de ces compresseurs assurera alors la compression partielle ou totale du débit de vapeur à comprimer ou d'une partie de celui-ci. Les termes « compresseur mécanique » et « thermocompresseur » et leurs équivalents utilisés dans la présente demande englobent par conséquent également de tels systèmes de compresseurs thermiques ou mécaniques.

L'éjectocompresseur utilisé en cas de demande énergétique forte, est de préférence un éjectocompresseur fonctionnant à une pression de vapeur motrice comprise entre 1,5 et 8 bars, de préférence entre 2 et 5 bars. Ces valeurs de pression correspondent à celles généralement disponibles en sortie de la plupart des centrales thermiques en cas de demande énergétique forte. Elles pourraient toutefois être situées en dehors de cet intervalle si les pressions de vapeur disponible étaient différentes.

Une variante de la présente invention est une installation de dessalement capable de fonctionner alternativement grâce à un thermocompresseur ou grâce à un compresseur mécanique de vapeur dans laquelle l'effet de prélèvement de vapeur n'est pas le même selon que l'on fonctionne en mode thermocompression ou compression mécanique. Selon les conditions de service prévues, il est en effet parfois possible d'optimiser le coût de construction de l'évaporateur en faisant prélever la vapeur aspirée par le thermocompresseur dans un effet intermédiaire plutôt que dans le dernier effet.

Dans le procédé et l'installation de la présente invention, les deux systèmes de compression ne fonctionnent à aucun moment en même temps. Lorsque, suite à une variation importante de la demande énergétique, il s'agit de basculer d'un mode de compression vers un autre, il est nécessaire d'arrêter dans un premier temps le compresseur en activité et d'obturer parfaitement la voie de passage de la vapeur d'eau à travers ce compresseur, d'ouvrir la voie de passage de la vapeur d'eau à travers le second compresseur, puis de mettre en route le deuxième compresseur en l'alimentant soit avec de la vapeur motrice à une pression appropriée (thermocompresseur) soit avec de l'électricité (compresseur mécanique). L'obturation de la voie de passage de la vapeur d'eau à travers les compresseurs peut se faire en aval ou en amont du compresseur, par exemple par fermeture d'une vanne, ou encore à l'intérieur même du compresseur, par exemple à l'aide d'un bouchon approprié placé au niveau du col d'un thermocompresseur.

L'invention est maintenant décrite en référence aux dessins annexés, non limitatifs, dans lesquels :
la figure 1 représente une installation de dessalement d'eau de mer selon l'invention fonctionnant en mode thermocompression, et
la figure 2 représente une installation de dessalement d'eau de mer selon l'invention fonctionnant en mode compression mécanique.

Dans ces figures qui représentent deux modes de fonctionnement d'une même installation de dessalement d'eau de mer, les lignes pleines ont été utilisées pour schématiser des dispositifs et conduites en activité, alors que les lignes en pointillé correspondent à des conduites et dispositifs ne fonctionnant pas dans le mode de fonctionnement en question.

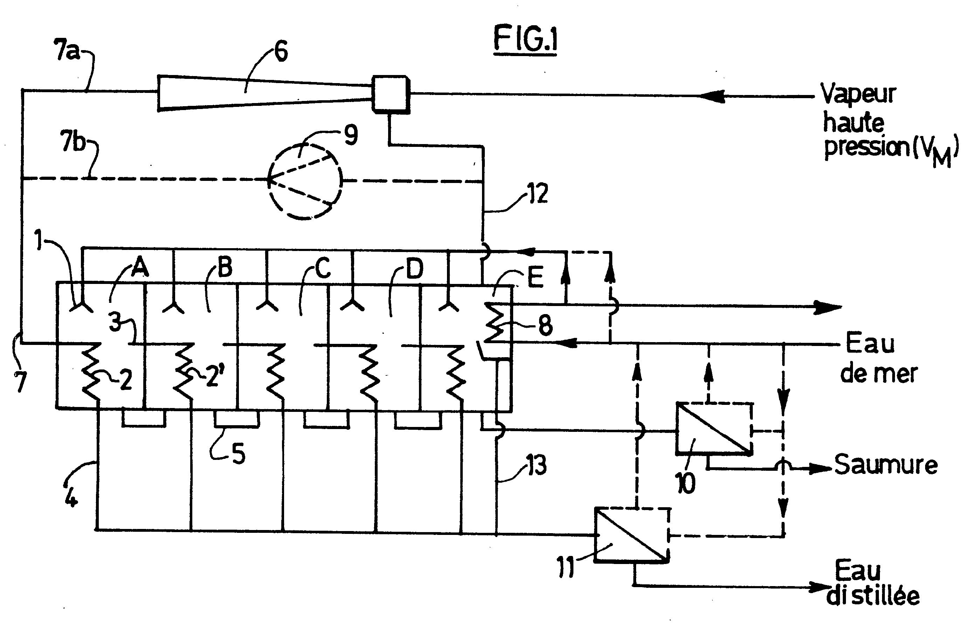

L'installation de dessalement d'eau de mer représentée sur la figure 1 comprend une série de cinq effets A, B, C, D, E. Le premier effet A est alimenté par la vapeur de chauffe arrivant par la conduite 7 dans l'échangeur de chaleur 2 du premier effet. L'échangeur de chaleur 2 est refroidi par de l'eau de mer introduite par des dispositifs d'arrosage 1 et s'écoulant en film mince sur la face externe de l'échangeur de chaleur. La vapeur de chauffe se condense dans l'échangeur de chaleur 2 et quitte l'effet A sous forme d'eau distillée 4. La chaleur de condensation de la vapeur de chauffe dans l'échangeur de chaleur 2 fournit l'énergie de vaporisation nécessaire pour transformer en vapeur une partie de l'eau de mer s'écoulant en film mince sur la face externe de l'échangeur de chaleur 2. Cette vapeur d'eau passe par la conduite 3 vers l'intérieur de l'échangeur de chaleur 2' de l'effet B suivant, semblable à l'effet A à ceci près qu'il est à une pression légèrement plus faible ce qui permet une nouvelle étape de condensation de vapeur et d'évaporation d'eau de mer. Les gaz non condensables tels que O₂, N₂ et CO₂, sont aspirés à partir de chacun des effets A, B, C, D et E par un moyen d'aspiration (non représenté). L'eau de mer concentrée en sels (saumure) passe d'effet en effet grâce à un système de conduites 5 et quitte l'installation à la sortie du dernier effet E, après être passée par l'échangeur de chaleur 10. Sur cette figure 1, l'échangeur de chaleur ne fonctionne pas, c'est-à-dire qu'il n'est pas alimenté par l'eau de mer plus froide que la saumure. La saumure n'est donc pas refroidie dans l'échangeur de chaleur 10 et est rejetée à une température relativement élevée. Il est toutefois possible de faire fonctionner cette partie de l'installation en mode thermique.

Le rôle et le mode de fonctionnement de l'échangeur de chaleur 11, situé dans la conduite d'évacuation 4 de l'eau distillée produite, est sensiblement identique à celui de l'échangeur de chaleur 10. Il pourrait permettre de récupérer l'énergie thermique de l'eau distillée chaude pour préchauffer, si nécessaire, l'eau de mer d'appoint. Dans le mode de fonctionnement représenté à la figure 1 il est inactif.

Le dernier effet E comprend un condenseur 8 permettant un préchauffage de l'eau de mer introduite dans les différents effets par les tuyères 1, l'évacuation de chaleur excédentaire et la condensation de la vapeur d'eau non recyclée par le compresseur thermique 6. L'eau distillée condensée par ce condenseur 8 rejoint, via la conduite 13, la conduite d'évacuation 4. La source froide du condenseur 8 est l'eau de mer prélevée directement ou l'eau de mer préchauffée dans l'échangeur de chaleur 10 et/ou 11. Au moins une partie de l'eau de mer chauffée sortant du condenseur 8 sert d'eau de mer d'appoint, l'autre partie étant rejetée.

Le dernier effet E est raccordé via une conduite 12 à deux compresseurs, un thermocompresseur 6 et un compresseur mécanique 9, montés en parallèle, dont seul le thermocompresseur 6 fonctionne ici. Lorsque l'éjectocompresseur 6 est actif, la voie de passage de la vapeur à travers le compresseur mécanique 9 doit être obturée. Cette obturation peut se faire à n'importe quel point entre le point de bifurcation de la conduite 12 et le point de jonction des conduites 7a et 7b.

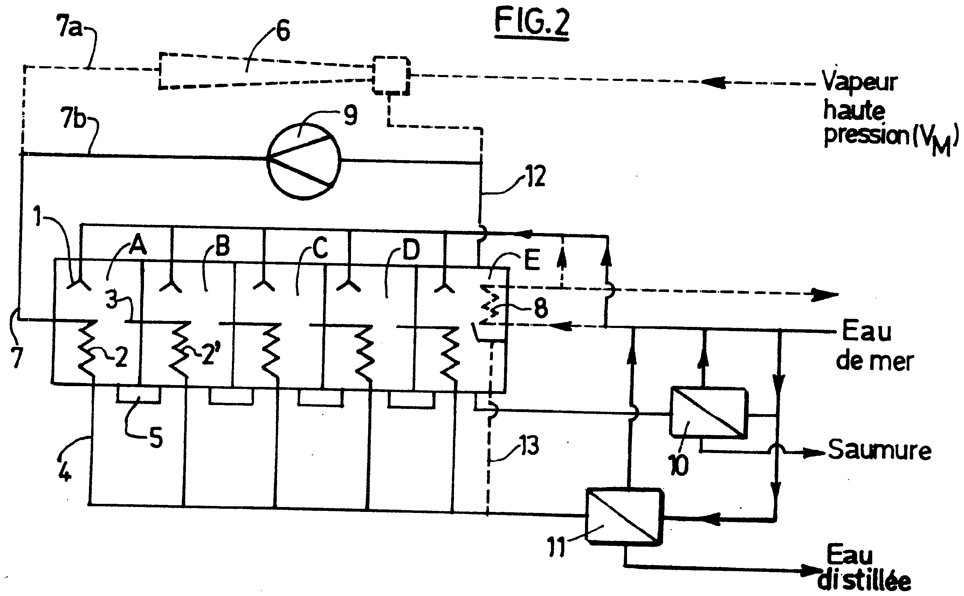

La figure 2 montre une installation identique à celle de la figure 1 qui fonctionne, non pas en mode de compression thermique, mais en compression mécanique. La voie de passage par le thermocompresseur 6 est bouchée et ce compresseur 6 est inactif (pointillé). Seul le compresseur mécanique 9 fonctionne. Dans ce mode de fonctionnement, l'installation ne reçoit pas d'énergie thermique sous forme de vapeur haute pression. Pour maintenir l'équilibre thermique du système, il est indispensable, premièrement, d'interrompre l'évacuation de chaleur par le condenseur 8 et, deuxièmement, de récupérer de la chaleur à partir des flux sortant d'eau distillée 4 et de saumure 5, Le fait de couper l'évacuation de la chaleur par le condenseur 8 en courcircuitant celui-ci, implique que la totalité de la vapeur formée dans le dernier effet E soit réaspirée et recyclée par le compresseur mécanique 9. Il n'y a, de ce fait, pas de production d'eau distillée par le condenseur 8 (conduite 13 en pointillé).

L'eau de mer d'appoint alimentant les tuyères 1 est préchauffée dans les échangeurs de chaleur 10 et 11 qui récupèrent la chaleur thermique des flux sortants d'eau distillée 4 et de saumure 5.

Sur les figures 1 et 2, les deux compresseurs prélèvent la vapeur d'eau froide à partir du dernier effet. On peut également concevoir des installations fonctionnant selon le même principe mais dans lesquelles l'effet de prélèvement du compresseur thermique 6 est un des effets en amont de l'effet E,

## Revendications

1. Installation de dessalement d'eau de mer par distillation à effets multiples (MED) avec thermocompression de vapeur (TVC), destinée à être couplée à une centrale thermique, comprenant
(A) une série de cellules de distillation (A, B, C, D, E, F), chaque cellule (effet) étant constituée
• d'une enceinte fermée comportant au moins un moyen (1) permettant de faire couler de l'eau de mer en film mince sur un échangeur de chaleur (2) chauffé par de la vapeur d'eau jusqu'à une température suffisante pour vaporiser une partie de l'eau de mer s'écoulant en film mince sur l'échangeur de chaleur (2),
• d'un moyen (3) permettant d'amener la vapeur d'eau ainsi formée dans l'échangeur de chaleur (2') de l'effet suivant,
• d'un moyen d'évacuation (4) de l'eau distillée liquide formée par condensation de la vapeur d'eau dans les échangeurs de chaleur,
• d'un moyen d'aspiration des gaz incondensables (O₂, N₂, CO₂),
• d'un moyen d'évacuation (5) de la saumure restant après évaporation d'une partie de l'eau de mer,
chaque effet fonctionnant à une température et une pression inférieures à celles de l'effet précédent, et
(B) un moyen de compression de vapeur permettant de comprimer au moins une partie de la vapeur d'eau émise par un des effets (effet de prélèvement), de préférence le dernier, et de la réinjecter dans le premier effet (A),
cette installation étant **caractérisée par le fait que** le moyen de compression de vapeur comprend à la fois un compresseur mécanique de vapeur (9) fonctionnant uniquement à l'électricité et un éjecto-compresseur (6) fonctionnant uniquement avec de la vapeur motrice fournie par la centrale thermique en sortie de turbine, les deux compresseurs (6, 9) étant montés en parallèle entre leur effet de prélèvement (E) et le premier effet (A) et fonctionnant en alternance selon la quantité de vapeur d'eau disponible en sortie de turbine, et **par le fait que** l'installation comprend en outre, en combinaison,
(a) un moyen d'évacuation de chaleur (8) situé dans le dernier effet,
(b) un premier moyen de récupération de chaleur (11) situé dans la conduite d'évacuation (4) de l'eau distillée et
(c) un deuxième moyen de récupération de chaleur (10) situé dans la conduite d'évacuation (5) de la saumure,
chacun de ces trois moyens (a), (b) et (c) fonctionnant indépendamment les uns des autres.

2. Installation de dessalement d'eau de mer selon la revendication 1, **caractérisée par le fait que** le moyen (1) permettant de faire couler de l'eau de mer en film mince sur les échangeurs de chaleur est une tuyère d'arrosage.

3. Installation de dessalement d'eau de mer selon l'une des revendications 1 ou 2, **caractérisée par le fait que** le premier moyen de récupération de chaleur (11) est un échangeur de chaleur eau de mer/eau distillée.

4. Installation de dessalement d'eau de mer selon l'une des revendications précédentes, **caractérisée par le fait que** le deuxième moyen de récupération de chaleur (10) est un échangeur de chaleur eau de mer/saumure.

5. Installation de dessalement d'eau de mer selon la revendication 1, **caractérisée par le fait que** le moyen d'évacuation de chaleur (8) situé dans le dernier effet est un condenseur alimenté par de l'eau de mer dont au moins une partie alimente ensuite les moyens (1) et dont l'autre partie est rejetée.

6. Installation de dessalement d'eau de mer selon l'une des revendications 3 à 5, **caractérisée par le fait que** le condenseur (8) est alimentée par de l'eau de mer préchauffée dans l'échangeur de chaleur (11) et/ou dans l'échangeur de chaleur (10).

7. Installation de dessalement d'eau de mer selon l'une des revendications précédentes, **caractérisée par le fait que** l'éjectocompresseur (6) est constitué d'un ensemble d'éjectocompresseurs montés en parallèle et/ou le compresseur mécanique (9) est constitué d'un ensemble de compresseurs mécaniques, montés en parallèle et/ou en série, chacun de ces compresseurs assurant la compression partielle ou totale du débit de vapeur à comprimer ou d'une partie de celui-ci.

8. Installation de dessalement selon l'une des revendications précédentes, **caractérisée par le fait que** l'éjectocompresseur fonctionne à une pression de vapeur motrice comprise entre 1,5 et 8 bars, de préférence entre 2 et 5 bars.

9. Installation de dessalement selon l'une des revendications précédentes, **caractérisée par le fait que** l'éjectocompresseur (6) et le compresseur mécanique (9) prélèvent la vapeur d'eau à comprimer dans le dernier de la série d'effets (E).

10. Installation de dessalement selon l'une des revendications précédentes, **caractérisée par le fait que** le compresseur mécanique (9) prélève la vapeur d'eau dans le dernier effet (E) et que l'éjectocompresseur prélève la vapeur d'eau dans un effet intermédiaire.

11. Procédé de dessalement d'eau de mer par distillation à effets multiples (MED) avec compression de vapeur, comprenant les étapes suivantes :
(a) vaporisation, dans le premier d'une série d'effets (A, B, C, D, E), d'eau de mer s'écoulant en film mince sur un premier échangeur de chaleur (2) chauffé par de la vapeur d'eau jusqu'à une température suffisante pour vaporiser ladite eau de mer,
(b) le transfert de la vapeur d'eau formée, en tant que fluide caloporteur dans l'échangeur de chaleur (2') de l'effet suivant fonctionnant à une température et une pression inférieures à celles de l'effet précédent,
(c) la condensation de la vapeur d'eau dans l'échangeur de chaleur (2') de l'effet suivant et,
(d) grâce à la chaleur de condensation libérée, la vaporisation d'eau de mer s'écoulant en film mince sur ledit échangeur de chaleur, la succession des étapes (b) à (d) étant répétée autant de fois que l'installation comporte d'effets supplémentaires fonctionnant chacun à une température et une pression inférieures à celles de l'effet précédent,
(e) la compression d'une partie ou de la totalité de la vapeur d'eau émise par un des effets (effet de prélèvement), de préférence le dernier, et
(f) réinjection de la vapeur d'eau comprimée dans l'étape (e) en tant que fluide caloporteur dans l'échangeur de chaleur (2) du premier effet de l'étape (a),
**caractérisé par le fait**
- **qu'**en cas de quantité de vapeur d'eau, **suffisante pour faire fonctionner l'installation de distillation à effets multiples,** disponible en sortie de turbine d'une centrale thermique, la compression et réinjection de la vapeur (étapes (e) et (f)) se fait par compression thermique au moyen d'un éjectocompresseur (6) alimenté par de la vapeur motrice chaude (V_{M}) provenant de la turbine de la centrale, l'excès de chaleur du système dû à l'injection de vapeur chaude étant alors évacué au moyen d'un condenseur (8) alimenté par de l'eau de mer et situé dans le dernier effet (E), et
- **qu'**en cas de quantité insuffisante de vapeur d'eau disponible en sortie de turbine de la centrale, la compression et réinjection de la vapeur d'eau (étapes (e) et (f)) se fait par compression mécanique au moyen d'un compresseur mécanique (9) alimenté uniquement avec de l'électricité, l'énergie thermique véhiculée par l'eau distillée et par la saumure produites étant alors récupérée au moyen d'un premier et d'un deuxième moyen de récupération de chaleur (11, 10) situés respectivement dans la conduite d'évacuation d'eau distillée (4) et dans la conduite d'évacuation de la saumure (5).

## Patentansprüche

1. Meerwasser-Entsalzungsanlage unter Verwendung von Mehrfacheffektdestillation (MED) mit thermischer Dampfkompression (TVC), die dazu bestimmt ist, an ein Wärmekraftwerk gekoppelt zu sein, umfassend:
(A) eine Reihe Destillationszellen (A, B, C, D, E, F), wobei jede Zelle (Effekt) aus Folgendem besteht:
- einem geschlossenen Raum, der mindestens ein Mittel (1) umfasst, das erlaubt, Meerwasser als dünnen Film über einen Wärmetauscher (2) fließen zu lassen, der durch Wasserdampf bis auf eine Temperatur erwärmt wird, die ausreichend ist, einen Teil des Meerwassers, das als dünner Film über den Wärmetauscher (2) fließt, zu verdampfen,
- einem Mittel (3), das erlaubt, den so gebildeten Wasserdampf in den Wärmetauscher (2') des folgenden Effekts zu überführen,
- einem Ableitmittel (4) für das flüssige destillierte Wasser, das durch Kondensieren des Wasserdampfes in den Wärmetauschern gebildet wird,
- einem Ansaugmittel der nicht kondensierbaren Gase (O₂, N₂, CO₂),
- einem Ableitmittel (5) der Salzlake, die nach dem Verdampfen eines Teils des Meerwassers zurückbleibt,
wobei jeder Effekt bei einer Temperatur und einem Druck betrieben wird, die geringer sind als die des vorhergehenden Effekts, und
(B) einem Dampfkompressionsmittel, das erlaubt, zumindest einen Teil des Wasserdampfes, der von einem der Effekte (Entnahmeeffekt) ausgegeben wird, bevorzugt dem letzten, zu komprimieren, und wieder in den ersten Effekt (A) einzuspritzen,
wobei diese Anlage **dadurch gekennzeichnet ist, dass** das Dampfkompressionsmittel gleichzeitig einen mechanischen Dampfkompressor (9) umfasst, der ausschließlich elektrisch betrieben wird, und eine Dampfstrahlpumpe (6), die ausschließlich mit Treibdampf betrieben wird, der vom Wärmekraftwerk am Turbinenaustritt geliefert wird, wobei die zwei Kompressoren (6, 9) zwischen ihrem Entnahmeeffekt (E) und dem ersten Effekt (A) parallel geschaltet sind und abwechselnd gemäß der am Turbinenaustritt verfügbaren Menge Wasserdampf betrieben werden, und **dadurch gekennzeichnet, dass** die Anlage überdies Folgendes in Kombination umfasst:
(a) ein Wärmeableitmittel (8), das sich im letzten Effekt befindet,
(b) ein erstes Wärmerückgewinnungsmittel (11), das sich in der Ableitrohrleitung (4) des destillierten Wassers befindet, und
(c) ein zweites Wärmerückgewinnungsmittel (10), das sich in der Ableitrohrleitung (5) der Salzlake befindet,
wobei jedes dieser drei Mittel (a), (b) und (c) unabhängig von den anderen betrieben wird.

2. Meerwasser-Entsalzungsanlage nach Anspruch 1, **dadurch gekennzeichnet, dass** das Mittel (1), das erlaubt, Meerwasser als dünnen Film über die Wärmetauscher fließen zu lassen, ein Sprühkopf ist.

3. Meerwasser-Entsalzungsanlage nach einem der Ansprüche 1 oder 2, **dadurch gekennzeichnet, dass** das erste Wärmerückgewinnungsmittel (11) ein Wärmetauscher für Meerwasser/destilliertes Wasser ist.

4. Meerwasser-Entsalzungsanlage nach einem der vorhergehenden Ansprüche, **dadurch gekennzeichnet, dass** das zweite Wärmerückgewinnungsmittel (10) ein Wärmetauscher für Meerwasser/Salzlake ist.

5. Meerwasser-Entsalzungsanlage nach Anspruch 1, **dadurch gekennzeichnet, dass** das Wärmeableitmittel (8), das sich im letzten Effekt befindet, ein Kondensator ist, der mit Meerwasser gespeist wird, wovon zumindest ein Teil anschließend die Mittel (1) speist und wovon der andere Teil verworfen wird.

6. Meerwasser-Entsalzungsanlage nach einem der Ansprüche 3 bis 5, **dadurch gekennzeichnet, dass** der Kondensator (8) mit Meerwasser gespeist wird, das im Wärmetauscher (11) und/oder im Wärmetauscher (10) vorgewärmt wird.

7. Meerwasser-Entsalzungsanlage nach einem der vorhergehenden Ansprüche, **dadurch gekennzeichnet, dass** die Dampfstrahlpumpe (6) aus einer Baugruppe von Dampfstrahlpumpen besteht, die parallel geschaltet sind, und/oder der mechanische Kompressor (9) aus einer Baugruppe von mechanischen Kompressoren besteht, die parallel geschaltet und/oder in Reihe geschaltet sind, wobei jeder der Kompressoren die teilweise oder vollständige Kompression der zu komprimierenden Dampfmenge oder eines Teils davon gewährleistet.

8. Meerwasser-Entsalzungsanlage nach einem der vorhergehenden Ansprüche, **dadurch gekennzeichnet, dass** die Dampfstrahlpumpe bei einem Treibdampfdruck zwischen 1,5 und 8 bar betrieben wird, bevorzugt zwischen 2 und 5 bar.

9. Meerwasser-Entsalzungsanlage nach einem der vorhergehenden Ansprüche, **dadurch gekennzeichnet, dass** die Dampfstrahlpumpe (6) und der mechanische Kompressor (9) den zu komprimierenden Wasserdampf aus dem letzten der Reihe von Effekten (E) entnehmen.

10. Meerwasser-Entsalzungsanlage nach einem der vorhergehenden Ansprüche, **dadurch gekennzeichnet, dass** der mechanische Kompressor (9) den Wasserdampf aus dem letzten Effekt (E) entnimmt und dass die Dampfstrahlpumpe den Wasserdampf aus einem Zwischeneffekt entnimmt.

11. Meerwasser-Entsalzungsverfahren unter Verwendung von Mehrfacheffektdestillation (MED) mit Dampfkompression, umfassend die folgenden Schritte:
(a) Verdampfen von Meerwasser in einem ersten aus einer Reihe von Effekten (A, B, C, D, E), das als dünner Film über einen ersten Wärmetauscher (2) fließt, der durch Wasserdampf bis auf eine Temperatur erwärmt wird, die ausreichend ist, um das Meerwasser zu verdampfen,
(b) Überführen des gebildeten Wasserdampfes als Wärmeträger in den Wärmetauscher (2') des folgenden Effekts, der bei einer Temperatur und einem Druck betrieben wird, die geringer sind als die des vorhergehenden Effekts,
(c) Kondensieren des Wasserdampfes im Wärmetauscher (2') des folgenden Effekts und
(d) Verdampfen von Meerwasser, das als dünner Film über den Wärmetauscher fließt, aufgrund der freigesetzten Kondensationswärme,
wobei die Abfolge der Schritte (b) bis (d) so viele Male wiederholt wird, wie die Anlage zusätzliche Effekte umfasst, die jeweils bei einer Temperatur und einem Druck betrieben werden, die geringer sind als die des vorhergehenden Effekts,
(e) Komprimieren eines Teils oder der Gesamtheit des Wasserdampfes, der von einem der Effekte (Entnahmeeffekt) ausgegeben wird, bevorzugt von dem letzten, und
(f) erneutes Einspritzen des in Schritt (e) komprimierten Wasserdampfes als Wärmeträger in den Wärmetauscher (2) des ersten Effekts von Schritt (a),
**dadurch gekennzeichnet,**
- **dass** in dem Fall, dass die Wasserdampfmenge, die am Turbinenaustritt eines Wärmekraftwerks verfügbar ist, ausreichend ist, die Mehrfacheffektdestillationsanlage zu betreiben, die Kompression und erneute Einspritzung des Dampfes (Schritte (e) und (f)) durch thermische Kompression mittels einer Dampfstrahlturbine (6) erfolgen, die mit heißem Treibdampf (V_{M}) aus der Turbine des Kraftwerks gespeist wird, wobei die überschüssige Wärme des Systems, die auf das Einspritzen von Heißdampf zurückzuführen ist, dann mittels eines Kondensators (8) abgeleitet wird, der mit Meerwasser gespeist wird und sich in dem letzten Effekt (E) befindet, und
- **dass** in dem Fall, dass die Wasserdampfmenge, die am Turbinenaustritt des Kraftwerks verfügbar ist, unzureichend ist, die Kompression und erneute Einspritzung des Wasserdampfes (Schritte (e) und (f)) durch mechanische Kompression mittels eines mechanischen Kompressors (9) erfolgen, der ausschließlich elektrisch betrieben wird, wobei die von dem destillierten Wasser und der produzierten Salzlake transportierte Wärmeenergie mittels eines ersten und eines zweiten Wärmerückgewinnungsmittels (11, 10) rückgewonnen wird, die sich jeweils in der Ableitrohrleitung von destilliertem Wasser (4) und in der Ableitrohrleitung der Salzlake (5) befinden.

## Claims

1. Installation for seawater desalination by multiple effect distillation (MED) with thermal vapour compression (TVC) intended for coupling with a thermal power plant, comprising
(A) a series of distillation cells (A, B, C, D, E, F), each cell (effect) consisting of
• a closed vessel comprising at least one means (1) for making the seawater flow as a thin film over a heat exchanger (2) heated by the steam to a sufficient temperature to vaporize a portion of the seawater flowing under gravity as a thin film over the heat exchanger (2),
• a means (3) for conveying the steam thus formed to the heat exchanger (2') of the next effect,
• a means (4) for removing liquid distilled water formed by condensation of the steam in the heat exchangers,
• a means for sucking the noncondensable gases (O₂, N₂, CO₂),
• a means (5) for removing the brine remaining after evaporation of a portion of the seawater,
each effect operating at a lower temperature and pressure than those of the previous effect, and
(B) a vapour compression means for compressing at least a portion of the water vapour issuing from one of the effects (offtake effect), preferably the last, and for recycling it to the first effect (A),
this installation being **characterized in that** the vapour compression means comprises both a mechanical vapour compressor (9) operating exclusively with electricity and a steam jet ejector (6) operating exclusively with motive vapour supplied by the thermal power plant at the turbine exit, the two compressors (6, 9) being mounted in parallel between their offtake effect (E) and the first effect (A) and operating alternately according to the quantity of steam available at the turbine exit, and **in that** the installation further comprises, in combination,
(a) a heat removal means (8) located in the last effect,
(b) a first heat recovery means (11) located in the distilled water removal pipe (4) and
(c) a second heat recovery means (10) located in the brine removal pipe (5),
each of these three means (a), (b) and (c) operating independently of one another.

2. Installation for seawater desalination according to Claim 1, **characterized in that** the means (1) for making the seawater flow as a thin film over the heat exchangers is a spray nozzle.

3. Installation for seawater desalination according to either of Claims 1 and 2, **characterized in that** the first heat recovery means (11) is a seawater/distilled water heat exchanger.

4. Installation for seawater desalination according to one of the preceding claims, **characterized in that** the second heat recovery means (10) is a seawater/brine heat exchanger.

5. Installation for seawater desalination according to Claim 1, **characterized in that** the heat removal means (8) located in the last effect is a condenser supplied with seawater, at least a portion of which is then supplied to the means (1) and the other portion of which is discharged.

6. Installation for seawater desalination according to one of Claims 3 to 5, **characterized in that** the condenser (8) is supplied with seawater preheated in the heat exchanger (11) and/or in the heat exchanger (10).

7. Installation for seawater desalination according to one of the preceding claims, **characterized in that** the steam jet ejector (6) consists of a set of steam jet ejectors mounted in parallel and/or the mechanical compressor (9) consists of a set of mechanical compressors mounted in parallel and/or in series, each of these compressors carrying out the partial or total compression of the flow of vapour to be compressed or of a portion thereof.

8. Desalination installation according to one of the preceding claims, **characterized in that** the steam jet ejector operates at a motive vapour pressure of between 1.5 and 8 bar, preferably between 2 and 5 bar.

9. Desalination installation according to one of the preceding claims, **characterized in that** the steam jet ejector (6) and the mechanical compressor (9) take the water vapour to be compressed from the last of the series of effects (E).

10. Desalination installation according to one of the preceding claims, **characterized in that** the mechanical compressor (9) takes the water vapour from the last effect (E) and that the steam jet ejector takes the water vapour from an intermediate effect.

11. Method for seawater desalination by multiple effect distillation (MED) with vapour compression, comprising the following steps:
(a) vaporization, in the first of a series of effects (A, B, C, D, E), of seawater flowing under gravity as a thin film over a first heat exchanger (2) heated by steam to a sufficient temperature to vaporize said seawater,
(b) transfer of the water vapour formed, as heat transfer fluid, to the heat exchanger (2') of the next effect operating at a lower temperature and pressure than those of the previous effect,
(c) condensation of the water vapour in the heat exchanger (2') of the next effect, and
(d) use of the heat of condensation released to vaporize seawater flowing as a thin film over said heat exchanger,
the succession of steps (b) to (d) being repeated as many times as the installation comprises additional effects each operating at a lower temperature and pressure than those of the previous effect,
(e) compression of a portion or of all of the water vapour issuing from one of the effects (offtake effect), preferably the last,
and
(f) recycling of the water vapour compressed in step (e), as heat transfer fluid, to the heat exchanger (2) of the first effect of step (a), **characterized in that**
- the vapour compression (e) takes place alternately either with a mechanical vapour compressor operating exclusively with electricity or with a steam jet ejector operating exclusively with motive vapour supplied by a thermal power plant, that is
- if a quantity of steam, sufficient for the operation of the multiple effect distillation installation, is available at the thermal power plant turbine exit, the vapour is compressed and recycled (steps (e) and (f)) by thermal compression using a steam jet ejector (6) supplied with hot motive vapour (V_{M}) issuing from the power plant turbine, the excess heat of the system due to the injection of hot vapour then being removed via a condenser (8) supplied with seawater and located in the last effect (E), and
- if an insufficient quantity of steam is available at the power plant turbine exit, the steam is compressed and recycled (steps (e) and (f)) by mechanical compression using a mechanical compressor (9) supplied exclusively with electricity, the heat energy conveyed by the distilled water and by the brine produced then being recovered by means of a first and a second heat recovery means (11, 10) located respectively in the distilled water removal pipe (4) and in the brine removal pipe (5).
